# FASCICULE DE BREVET EUROPEEN

(11) **EP 0 704 150 B1**
(45) Date de publication et mention de la délivrance du brevet: **15.12.1999**
(21) Numéro de dépôt: 94810563.0
(22) Date de dépôt: 27.09.1994
(51) Int. Cl.: A01G 3/02

(54) **Pince coupante, notamment sécateur**
Schneidzange, insbesondere Gartenschere
Cutting pliers, especially garden shears

(43) Date de publication de la demande: 03.04.1996
(73) Titulaire: Felco SA, CH-2206 Les Geneveys-sur-Coffrane (CH)
(72) Inventeur: Auderset, Régis, CH-2206 Les Geneveys s/Coffrane (CH)
(74) Mandataire: Fischer, Franz Josef

(56) Documents cités:
- EP-A- 0 352 982
- US-A- 4 197 605
- US-A- 4 635 363
- US-A- 4 964 216
- US-A- 5 046 381

## Description

La présente invention concerne une pince coupante constituée notamment d'une première poignée portant une lame de coupe et une seconde poignée portant une contre-lame ou une seconde lame de coupe, les deux poignées étant reliées par un axe afin de permettre une coupe par effet de ciseau; l'invention concerne aussi et plus particulièrement un sécateur.

Par pince à effet de ciseau, on entend ici une pince composée de deux poignées terminées soit d'une lame soit d'une contre-lame et possédant un axe de pivotement permettant de rapprocher, respectivement d'éloigner la lame de la contre-lame en agissant sur les poignées.

On connaît en particulier deux types de sécateurs, un premier type dit "sécateur à une main", pouvant être utilisé d'une seule main et apte en conséquence à couper des branches d'un diamètre ou d'une résistance limitée. Dans le même type on peut classer aussi les sécateurs munis de moyens d'amplification de la force, généralement des moyens de démultiplication du mouvement de coupe, pouvant être utilisés d'une seule main; ces derniers sécateurs sont généralement de conception et d'emploi relativement compliqués, il sont généralement relativement lourds. Un autre type de sécateurs est le "sécateur à deux mains", équipé de deux poignées relativement longues et apte à sectionner des branches plus résistantes. De par son encombrement et son poids, ce dernier sécateur n'est généralement utilisé que dans des cas assez particuliers. Un autre inconvénient des sécateurs à deux mains est que vu leur peu de maniabilité, leur guidage est assez peu précis. Un utilisateur devant tailler une haie ou un arbre comportant aussi bien des branches fines que des branches plus grosses, utilisera de préférence un sécateur à une main, nettement plus léger et plus maniable que l'autre et ne recourra à une scie ou à un sécateur à deux mains que lorsqu'il n'arrivera pas à sectionner une branche plus résistante.

L'utilisateur doit donc généralement utiliser deux outils séparés, ce qui peut être un inconvénient majeur, d'une part lorsqu'il est installé au haut d'un arbre et ce qui d'autre part augmente ses coûts d'acquisition d'outils.

Les problèmes mentionnés ci-dessus pour les sécateurs s'appliquent aussi évidemment à d'autres outils de coupe par effet de ciseau, notamment les pinces coupantes ou cisailles pour tôles ou fils et câbles métalliques.

Un outil de coupe à deux mains est décrit dans le brevet US-A-4 964 216. Il y est mentionné que si nécessaire les deux poignées peuvent être allongées par des moyens télescopiques. Même si la figure 1 de ce document montre qu'une seule des poignées a été rallongée, on comprend bien d'après la description que pour son usage, les deux poignées sont en position courte ou en position allongée. De par sa conception, on voit bien de plus que cette pince n'est pas destinée à pouvoir être utilisée d'une seule main.

Le brevet US-A-4 197 605 montre une pince coupante dont une poignée est plus longue que l'autre. Dans ce cas, la surlongueur est uniquement destinée à supporter un outil complémentaire et il n'est nulle part fait mention dans ce document de la possibilité d'utiliser cette surlongueur dans le but de l'invention.

Les brevets US-A-4 635 363 et 5 046 381 montrent des pinces coupantes dont les poignées de longueurs différentes sont formées ergonomiquement afin de recevoir une main de l'utilisateur.

Le but de l'invention est donc de proposer une pince coupante et plus particulièrement un sécateur réunissant les avantages des deux outils habituels mentionnés, sans en posséder les inconvénients, pouvant être utilisée d'une manière particulière.

Ce but est atteint par une pince coupante répondant aux caractéristiques des revendications 1 à 4, utilisée de la manière décrite à la revendication 5.

L'invention est décrite ci-dessous et est à considérer en regard du dessin annexé comportant les figures où:
la figure 1 représente une forme d'exécution préférentielle d'un sécateur selon l'invention,
la figure 2 montre une manière d'utiliser ledit sécateur.

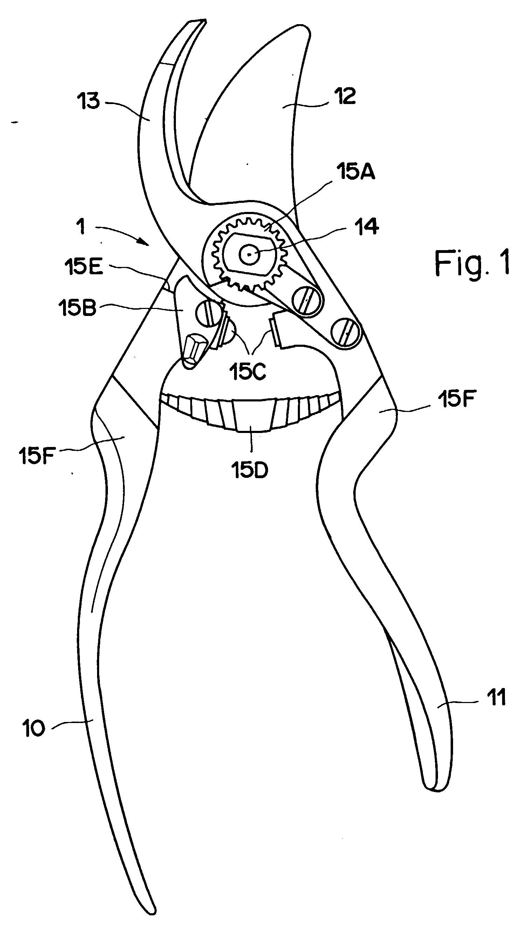

A la figure 1, le sécateur 1 selon l'invention est constitué, comme ceux connus antérieurement, des deux poignées 10 et 11, la poignée 10 portant à une extrémité une lame de coupe 12 alors que la poignée 11 porte une contre-lame 13. Les deux poignées 10 et 11 sont réunies de manière pivotante autour d'un axe, de manière à rapprocher, par effet de ciseau, la lame 12 de la contre-lame 13 lorsque les deux poignées 10 et 11 sont rapprochées. Des moyens auxiliaires, tels que dispositif de réglage de la force de frottement de pivotement 15A, dispositif de blocage en position fermée 15B, butées de fin de course en position fermée 15C, ressort d'écartement 15D ou butée de fin de course en position ouverte 15E, protection 15 F des poignées 10 et 11, connus généralement de la technique, peuvent aussi être prévus sur le sécateur selon l'invention.

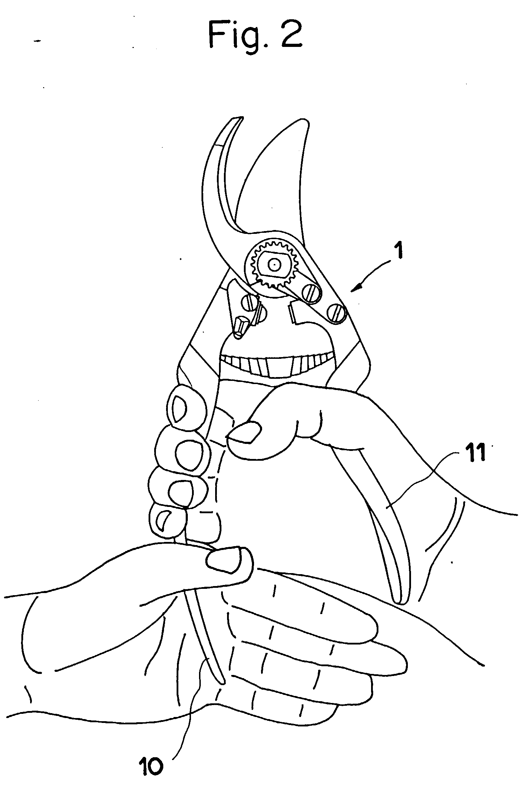

L'invention réside dans le fait de prévoir que l'une des poignées, de préférence la poignée 10 portant la lame 12, est plus longue que l'autre poignée 11. Ainsi, et comme on le voit à la figure 2, la surlongueur de la poignée 10 permet à l'utilisateur de venir y placer la paume de sa seconde main, sous et en opposition à la première main, de manière à augmenter la force exercée pour la coupe. Comme on le voit sur les figures, la surlongueur de la poignée 10 n'est pas excessive, de manière à ne pas gêner l'utilisateur lors d'un emploi avec une seule main. De préférence la longueur de la poignée la plus longue (10) est inférieure à 20 cm. Ainsi, le sécateur reste très maniable, pouvant être utilisé comme sécateur à une main, l'utilisateur pouvant facilement utiliser sa deuxième main afin d'aider à la coupe en cas de résistance trop grande de la branche à couper. A l'aide d'un seul outil, l'utilisateur est donc à même de faire face à toutes les situations.

Comme indiqué précédemment, l'invention décrite ci-dessus appliquée à un sécateur peut aussi s'appliquer à tous types d'outils de coupe par effet de ciseau, par exemple des pinces coupantes ou cisailles pour objets métalliques ou autres, comme des tôles, des fils ou câbles métalliques etc. Des variantes de configuration du sécateur ou de la pince peuvent être envisagées, en particulier la deuxième poignée peut aussi porter une lame de coupe au lieu d'une contre-lame, la condition étant que l'une au moins des poignées soit plus longue de manière à ce que l'utilisateur puisse venir aider au mouvement de coupe avec sa seconde main.

## Revendications

1. Pince coupante à une main constituée d'une première poignée (10) portant une lame de coupe (12) et une seconde poignée (11) portant une contre-lame (13) ou une seconde lame de coupe, les deux poignées étant reliées par un axe (14) afin de permettre une coupe par effet de ciseau et comprenant un ressort d'écartement (15D) caractérisée en ce que
au moins l'une (10) des deux poignées est plus longue que l'autre poignée (11), la surlongueur de la poignée la plus longue (10) étant telle que l'utilisateur peut facilement appuyer avec la paume de sa seconde main sur la longueur disponible au-delà de la longueur déjà utilisée par les doigts de sa première main.

2. Pince coupante selon la revendication 1, caractérisée en ce que la longueur de la poignée la plus longue (10) est inférieure à 20 cm.

3. Pince coupante selon l'une des revendications précédentes, caractérisée en ce qu'elle comprend en outre,
- des moyens de réglage de la force de friction (15A), et/ou
- des moyens de blocage de la pince en position fermée (15B), et/ou
- des moyens de butée en position fermée (15C), et/ou
- des moyens de butée en position ouverte (15E), et/ou
- des moyens de protection des poignées (15F)

4. Pince coupante selon l'une des revendications précédentes, caractérisée en ce qu'il s'agit d'un sécateur (1).

5. Utilisation d'une pince coupante selon l'une des revendications précédentes en s'aidant de la paume de la seconde main qui vient en appui sur la surlongueur de la plus longue poignée (10).

## Claims

1. Cutting nippers for one hand comprising a first handle (10) bearing a cutting blade (12) and a second handle (11) bearing a counter-blade (13) or a second cutting blade, the two handles being connected by an axis (14) in order to permit cutting with scissors effect, and including a spacing spring (15D) characterised in that
at least one (10) of the two handles is longer than the other handle (11), the excess length of the longer handle (10) being such that the user can easily press with the palm of his second hand on the available length beyond the length already used by the fingers of his first hand.

2. Cutting nippers according to claim 1, characterised in that the length of the longer handle (10) is less than 20 cm.

3. Cutting nippers according to one of the preceding claims, characterised in that they comprise in addition
- means of adjusting the force of friction (15A), and/or
- means of blocking the nippers in closed position (15B), and/or
- means of stopping in closed position (15C), and/or
- means of stopping in open position (15E), and/or
- means of protecting the handles (15F).

4. Cutting nippers according to one of the preceding claims, characterised in that they are pruning shears (1).

5. Use of cutting nippers according to one of the preceding claims by making use of the palm of the second hand which comes to press on the excess length of the longer handle (10).

## Patentansprüche

1. Handschneidzange, umfassend einen ersten Handgriff (10), der eine Schneidklinge (12) trägt, und einen zweiten Handgriff (11), welcher eine Gegenklinge (13) oder eine zweite Schneidklinge trägt, wobei die beiden Handgriffe durch eine Achse (14) verbunden sind, um einen Schnitt durch Schereneffekt zu ermöglichen, und mit einer Abstandsfeder (15D), dadurch gekennzeichnet, dass mindestens einer (10) der beiden Handgriffe länger als der andere Handgriff (11) ist, wobei die Überlänge des längeren Handgriffes (10) derart ist, dass sich der Benutzer leicht mit der Handfläche seiner zweiten Hand auf der verfügbaren Länge jenseits von der bereits durch die Finger seiner ersten Hand benutzten Länge abstützen kann.

2. Schneidzange nach Patentanspruch 1, dadurch gekennzeichnet, dass die Länge des längeren Handgriffes (10) kleiner als 20 cm ist.

3. Schneidzange nach einem der vorangehenden Patentansprüche, dadurch gekennzeichnet, dass sie unter anderem Mittel zur Regulierung der Reibungskraft (15A) und/oder Mittel zur Blockierung der Zange in einer geschlossenen Position (15B), und/oder Anschlagmittel in geschlossener Lage (15C), und/oder Anschlagmittel in offener Lage (15E) und/oder Schutzmittel für die Handgriffe (15F) umfasst.

4. Schneidzange nach einem der vorangehenden Patentansprüche, dadurch gekennzeichnet, dass es sich um eine Gartenschere (1) handelt.

5. Verwendung einer Schneidzange nach einem der vorangehenden Patentansprüche, indem die Handfläche der zweiten Hand benutzt wird, welche sich auf die Überlänge des längeren Handgriffes (10) abstützt.
